(19) Europäisches Patentamt / European Patent Office / Office européen des brevets

(11) **EP 2 350 799 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(21) Anmeldenummer: **09781591.4**

(22) Anmeldetag: **06.08.2009**

(51) Int Cl.:
*G06F 3/048* *(2013.01)*    *B60K 35/00* *(2006.01)*

(86) Internationale Anmeldenummer:
**PCT/EP2009/060249**

(87) Internationale Veröffentlichungsnummer:
**WO 2010/046147 (29.04.2010 Gazette 2010/17)**

(54) **VERFAHREN UND VORRICHTUNG ZUM ANZEIGEN VON IN LISTEN GEORDNETER INFORMATION**

METHOD AND DEVICE FOR DISPLAYING INFORMATION SORTED INTO LISTS

PROCÉDÉ ET DISPOSITIF D'AFFICHAGE D'INFORMATIONS ORDONNÉES SOUS FORME DE LISTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.10.2008 DE 102008052485**

(43) Veröffentlichungstag der Anmeldung:
**03.08.2011 Patentblatt 2011/31**

(73) Patentinhaber: **Volkswagen Aktiengesellschaft 38440 Wolfsburg (DE)**

(72) Erfinder: **HÖHNE, Sven 38518 Gifhorn (DE)**

(74) Vertreter: **Reitstötter Kinzebach Patentanwälte Sternwartstrasse 4 81679 München (DE)**

(56) Entgegenhaltungen:
**GB-A- 2 434 068    US-B1- 7 269 002**

• ANONYMOUS: "iPod touch Benutzerhandbuch (with iPhone 2.1 Software): pages 15-45 and 134" [Online] September 2008 (2008-09), APPLE INC. , XP002565893 Gefunden im Internet: URL:http://manuals.info.apple.com/de_DE/iPod_touch_2.1_Benutzerhandbuch.pdf> Seite 22 - Seite 23 Seite 38

**Beschreibung**

Die vorliegende Erfindung betrifft ein Verfahren zum Anzeigen von Informationen, bei dem auf einer Anzeigefläche eine Teilmenge einer Liste angezeigt wird, die eine Vielzahl von Listeneinträgen umfasst. Die angezeigte Teilmenge der Liste wird durch einen ersten Bedienvorgang eines Nutzers verändert, wobei durch den ersten Bedienvorgang die Listeneinträge der Liste nacheinander durchlaufen werden. Durch einen zweiten Bedienvorgang werden mehrere Listeneinträge übersprungen, um zu einem Listeneintrag zu gelangen, der nicht in der angezeigten Teilmenge der Listeneinträge enthalten ist, die beim Ausführen des zweiten Bedienvorgangs angezeigt wurden. Der erste und der zweite Bedienvorgang umfasst dabei eine Bewegung auf einer berührungsempfindlichen Oberfläche einer Eingabeeinrichtung, die auf der Anzeigefläche ausgebildet ist. Der erste Bedienvorgang umfasst dabei eine Bewegung in einer ersten Richtung und der zweite Bedienvorgang eine Bewegung in einer zweiten Richtung, wobei sich die erste Richtung von der zweiten Richtung unterscheidet. Des Weiteren betrifft die Erfindung eine Vorrichtung zum Anzeigen von Informationen mit einer Anzeigevorrichtung mit einer Anzeigefläche, einem Speicher zum Speichern einer Liste, die eine Vielzahl von Listeneinträgen umfasst, von der eine Teilmenge auf der Anzeigefläche anzeigbar ist, und einer Bedieneinrichtung, die eine Eingabeeinrichtung mit einer berührungsempfindlichen Oberfläche umfasst und die von einem Nutzer betätigbar ist, um die angezeigte Teilmenge der Liste durch einen ersten Bedienvorgang zu verändern, wobei durch den ersten Bedienvorgang die Listeneinträge der Liste nacheinander durchlaufen werden und wobei die Bedieneinrichtung von dem Nutzer mit einem zweiten Bedienvorgang betätigbar ist, durch den mehrere Listeneinträge übersprungen werden, um zu einem Listeneintrag zu gelangen, der nicht in der angezeigten Teilmenge der Listeneinträge enthalten ist, die beim Ausführen des zweiten Bedienvorgangs angezeigt wurden.

Mobile Geräte der Unterhaltungselektronik, wie z. B. Geräte zur Wiedergabe von Audio- und/oder Videodateien, weisen mittlerweile Speicher auf, in denen sehr große Datenbestände gespeichert werden können. Beispielsweise können in mobilen Musikspielern mehrere tausend Musikstücke gespeichert werden. Bei solchen mobilen Geräten ergibt sich das Problem, wie der Nutzer auf diese großen Datenbestände einfach zugreifen kann. Zur Benutzerführung weisen die mobilen Geräte vielfach ein Display und eine Bedieneinrichtung auf. Die Bedieneinrichtung kann eine berührungsempfindliche Oberfläche des Displays umfassen oder ein von dem Display separates Bedienelement sein. Die in dem Gerät gespeicherten Datenbestände können zumindest zum Teil als Liste gespeichert sein, von der eine Teilmenge auf dem Display angezeigt werden kann. Mittels der Bedieneinrichtung kann der Nutzer durch die Liste scrollen, um zu dem gewünschten Listeneintrag zu gelangen. Enthält die Liste jedoch sehr viele Listeneinträge, ergibt sich das Problem, dass es sehr lange dauert, um zu einem Listeneintrag zu gelangen, der sehr weit entfernt von den angezeigten Listeneinträgen in der Liste eingeordnet ist. Aus diesem Grund wurde vorgeschlagen, die Listeneinträge hierarchisch zu gruppieren. Dabei ergibt sich jedoch der Nachteil, dass der Nutzer durch eine tiefverzweigte hierarchische Menüstruktur navigieren muss, um zu einem gewünschten Listeneintrag zu gelangen.

Im Abschnitt des "iPod touch Handbuchs" mit iPhone 2.1 Software Seiten 15-45 vom 09.09.2008 werden verschiedene Bedienvorgänge beschrieben, mit welchen gemäß dem Oberbegriff der Ansprüche 1 und 6 in einer Liste navigiert werden kann. Der Nutzer kann seinen Finger auf dem Bildschirm aufwärts und abwärts bewegen, um in den Listeneinträgen zu blättern. Durch ein schnelles Streichen mit dem Finger über den Bildschirm kann ein schneller Blättervorgang ausgelöst werden. Ferner können einige Listen über einen Index verfügen, der an der rechten Seite angezeigt wird. Dieser Index umfasst Buchstaben. Wenn ein Nutzer auf einen Buchstaben tippt, springt die Liste zu Objekten, die mit dem betreffenden Buchstaben beginnen. Wenn ein Nutzer mit dem Finger auf dem Index entlang fährt, wird schnell durch die Liste geblättert.

Des Weiteren ergibt sich auch bei der Informationsanzeige in einem Fahrzeug das Problem, dass sehr große Datenbestände im Fahrzeug visualisiert werden müssen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geografische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen. Dabei ergeben sich bei der Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen. Die Größe bzw. das Maß der Veränderung der angezeigten Information, d. h. in diesem Fall die Anzahl der Positionen, um die sich die Listeneinträge, die angezeigt werden, verändern, hängt in diesem Fall von der Länge der Bedienbewegung bzw. der Bediendauer ab.

Die GB 2 434 068 A beschreibt eine Nutzerschnittstelle für ein Fahrzeug. Sie umfasst eine Vorrichtung mit einem Display, welches Objekte mit einer dreidimensionalen Form darstellt. Die Nutzerschnittstelle umfasst einen Trackball, mit dem das dreidimensional dargestellte Objekt bewegt werden kann.

Die US 7,269,002 B1 beschreibt schließlich eine Andockstation für ein Fahrzeug, mittels welcher elektronische Geräte angeschlossen werden können.

Falls im Fahrzeug auf eine sehr lange Liste mit vielen Listeneinträgen zugegriffen werden soll, ergibt sich das Problem, dass der Bedienvorgang für einen Bildlauf zu sehr entfernt liegenden Listeneinträgen ein hohes Maß an Zeit und Aufmerksamkeit vom Nutzer abverlangt. Dies ist jedoch, wie vorstehend erläutert, bei der Anwendung in einem Fahrzeug nachteilig.

Es ist daher die Aufgabe der vorliegenden Erfindung, ein Verfahren und eine Vorrichtung der eingangs genannten Art bereitzustellen, mit denen auf einfache und für den Nutzer intuitive Weise eine Veränderung der angezeigten Teilmenge der Liste so erfolgen kann, dass der hierfür erforderliche Bedienvorgang so schnell wie möglich durchgeführt werden kann. Ferner soll dem Nutzer ein möglichst geringes Maß an Aufmerksamkeit abverlangt werden.

Diese Aufgabe wird erfindungsgemäß durch ein Verfahren mit den Merkmalen des Anspruchs 1 und eine Vorrichtung mit den Merkmalen des Anspruchs 6 gelöst. Vorteilhafte Aus- und Weiterbildungen ergeben sich aus den Unteransprüchen.

Das erfindungsgemäße Verfahren ist dadurch gekennzeichnet, dass der zweite Bedienvorgang eine Bewegung ist, die mit einer Berührung der berührungsempfindlichen Oberfläche bei einer Position startet, bei der ein Listeneintrag der Teilmenge angezeigt wird.

Unter einer *Liste* wird im Sinne der Erfindung ein Datenbestand verstanden, der in eine Vielzahl von Dateneinheiten einteilbar ist. Die Dateneinheiten entsprechen dann den Listeneinträgen. Die Dateneinheiten können in eine bestimmte Reihenfolge gebracht werden, so dass sie dann eine Liste darstellen. Mittels des ersten Bedienvorgangs kann der Nutzer die Listeneinträge der Liste nacheinander durchlaufen. Dabei kann eine Teilmenge der Liste, d. h. mehrere Listeneinträge, an Hand eines grafischen Objekts auf der Anzeigefläche wiedergegeben werden.

Die Liste kann beispielsweise eine Vielzahl von Audio- oder Videodateien umfassen. Ferner kann sie Einträge eines Telefon- oder Adressbuchs, Einträge zu einem Menü einer hierarchischen Menüstruktur zur Bedienung einer Einrichtung oder andere Dateneinheiten betreffen, die sich in einer Liste zusammenfassen und abstrakt an Hand eines grafischen Objekts darstellen lassen.

Durch den zweiten Bedienvorgang, den das erfindungsgemäßen Verfahren ermöglicht, kann die Liste sehr viel schneller durchsucht werden, um zu einem gewünschten Listeneintrag zu gelangen, da nicht die gesamte Liste Eintrag für Eintrag durchlaufen werden muss, bis man zu dem gewünschten Listeneintrag gelangt, sondern durch den zweiten Bedienvorgang mehrere Listeneinträge übersprungen werden können, um schneller zu dem gewünschten Listeneintrag zu gelangen.

Gemäß einer Ausgestaltung des erfindungsgemäßen Verfahrens verläuft die zweite Richtung insbesondere im Wesentlichen senkrecht zu ersten Richtung. Beispielsweise kann ein Listeneintrag mittels des Bedienvorgangs in horizontaler Richtung bewegt werden, um durch die einzelnen Listeneinträge zu scrollen. In diesem Fall führt eine vertikale Bewegung des Listeneintrags dazu, dass mehrere Listeneinträge übersprungen werden, um zu einem Listeneintrag zu gelangen, der noch nicht angezeigt wurde, als der betreffende Listeneintrag in vertikaler Richtung bewegt wurde. Selbstverständlich sind auch beliebige andere Richtungskombinationen für die beiden Bedienvorgänge möglich, solange sich die beiden Richtungen für die Bedienvorgänge unterscheiden.

Gemäß einer Ausbildung des erfindungsgemäßen Verfahrens sind die Listeneinträge der Liste in Klassen eingeteilt. In diesem Fall gelangt man durch den zweiten Bedienvorgang zu einem Listeneintrag einer anderen Klasse. Die Klassen bilden insbesondere auch eine Liste, wobei die einzelnen Klassen sortierte Listeinträge umfassen. In diesem Fall gelangt man durch den zweiten Bedienvorgang bevorzugt zum ersten Listeneintrag der nächsten oder vorhergehenden Klasse. Ein Beispiel für eine solche Klasseneinteilung ist eine alphabetische Sortierung von Listeneinträgen. Eine Klasse umfasst in diesem Fall alle Listeneinträge mit einem bestimmten Anfangsbuchstaben.

Durch den ersten Bedienvorgang scrollt man insbesondere durch die Liste. Durch den zweiten Bedienvorgang kann das Scrollen dadurch abgekürzt werden, dass mehrere Listeneinträge übersprungen werden.

Bei dem erfindungsgemäßen Verfahren ist die berührungsempfindliche Oberfläche der Eingabeeinrichtung auf der Anzeigefläche ausgebildet. Die Listeneinträge der Teilmenge der Liste können in einer eindimensionalen Linie auf der Anzeigefläche angezeigt werden. Der erste Bedienvorgang kann in diesem Fall eine Bewegung auf der berührungsempfindlichen Oberfläche umfassen, die im Wesentlichen in Richtung der eindimensionalen Linie verläuft. Der zweite Bedienvorgang kann eine Bewegung auf der berührungsempfindlichen Oberfläche umfassen, die im Wesentlichen in einer zu der eindimensionalen Linie senkrechten Richtung verläuft. Die Bewegungen brauchen dabei nicht exakt in Richtung der eindimensionalen Linie bzw. senkrecht zu dieser verlaufen. Sie können auch in einem Winkelbereich von z. B. ± 5 Grad oder ± 10 Grad um diese Richtungen verlaufen.

Gemäß einer Weiterbildung des erfindungsgemäßen Verfahrens umfasst zumindest ein Bedienvorgang eine Bewegung der Anzeigefläche im Raum und es wird die Beschleunigung der Anzeigefläche im Raum erfasst. In diesem Fall bewegt der Nutzer die Vorrichtung, welche die Anzeigefläche umfasst, z. B. in eine bestimmte Richtung. Diese Bewegung beinhaltet eine Beschleunigung der Anzeigefläche, die erfasst wird. Aus der Bewegungsrichtung kann abgeleitet werden, in welche Richtung eine Liste durchlaufen werden soll. Die Bewegung in eine andere Richtung kann als zweiter Bedienvorgang interpretiert werden, bei dem mehrere Listeneinträge übersprungen werden.

Gemäß einer Ausgestaltung des erfindungsgemäßen Verfahrens werden die angezeigten Listeneinträge auf einem virtuellen, perspektivisch dargestellten Ring oder Teilring angeordnet dargestellt. In diesem Fall werden durch den ersten Bedienvorgang die angezeigten Listeneinträge auf dem virtuellen Ring oder Teilring karussellartig gedreht.

Unter dem Begriff *drehen* wird im Sinne der Erfindung verstanden, dass der virtuelle Ring bzw. Teilring gedreht wird. Da der dreidimensionale virtuelle Ring auf dem Display in einer zweidimensionalen perspektivischen Darstellung wiedergegeben wird, werden die Objekte hinsichtlich ihrer Position auf dem Display tatsächlich verschoben.

Bei der erfindungsgemäßen Vorrichtung zum Anzeigen von Informationen umfasst der erste und der zweite Bedienvorgang eine Bewegung auf einer berührungsempfindlichen Oberfläche einer Eingabeeinrichtung und der erste Bedienvorgang umfasst eine Bewegung in einer ersten Richtung und der zweite Bedienvorgang eine Bewegung in einer zweiten Richtung, wobei sich die erste Richtung von der zweiten Richtung unterscheidet. Die erfindungsgemäße Vorrichtung ist dadurch gekennzeichnet, dass der zweite Bedienvorgang eine Bewegung ist, die mit einer Berührung der berührungsempfindlichen Oberfläche bei einer Position startet, bei der ein Listeneintrag der Teilmenge angezeigt wird.

Die erfindungsgemäße Vorrichtung ist insbesondere so ausgestaltet, dass sie die vorstehend beschriebenen Verfahrensschritte teilweise oder vollständig ausführen kann.

Die Bedieneinrichtung der erfindungsgemäßen Anzeigevorrichtung kann eine Benutzerschnittstelleneinrichtung und eine Eingabeeinrichtung umfassen. Mit der Benutzerschnittstelleinrichtung sind in Abhängigkeit von einer Eingabe über die Eingabeeinrichtung Grafikdaten erzeugbar, welche die Anzeigevorrichtung so ansteuert, dass eine bestimmte Anzeige auf der Anzeigefläche wiedergegeben wird. Für eine Veränderung der Grafikdaten, beispielsweise zum Erzeugen einer Animation, kann die Benutzerschnittstelleneinrichtung eine Recheneinheit umfassen, die Grafikdaten für Zwischenbilder für die Animation erzeugt. Diese Zwischenbilder können jedoch auch bereits vorab in dem Speicher gespeichert sein.

Der erste bzw. zweite Bedienvorgang, welcher von der Bedieneinrichtung der erfindungsgemäßen Vorrichtung in eine Veränderung der Anzeige auf der Anzeigefläche umgesetzt wird, umfassen insbesondere die vorstehend mit Bezug zu dem erfindungsgemäßen Verfahren beschriebenen Bedienvorgänge. Hierfür umfasst die Eingabeeinrichtung eine berührungsempfindliche Oberfläche. Diese Oberfläche ist auf der Anzeigefläche ausgebildet, d. h. die Anzeigevorrichtung ist mit einem Touchscreen ausgestattet. Des Weiteren kann es sich bei der Eingabeeinrichtung um eine Einrichtung zum Erfassen und Auswerten einer Geste eines Körperteils eines Nutzers handeln, welche vor der Anzeigefläche ausgeführt wird. Hierfür kann die Eingabeeinrichtung insbesondere eine Empfangseinrichtung umfassen, an die ein Signal von dem Körperteil des Nutzers kapazitiv übertragbar ist, wenn sich der Körperteil in der Nähe der Empfangseinrichtung befindet. Mittels dieser kapazitiven Koppelung kann die Position des Körperteils detektiert werden. Aus der zeitlichen Veränderung dieser Position kann auf eine Geste des Nutzers geschlossen werden.

Ferner kann gemäß einer anderen Ausgestaltung die Eingabeeinrichtung eine Infrarotlichtquelle oder einen Empfänger für reflektiertes Infrarotlicht zum Erfassen der Geste des Körperteils des Nutzers umfassen. Auch in diesem Fall wird die Position des Körperteils und deren zeitliche Veränderung erfasst und als Geste interpretiert.

Des Weiteren kann ein Annäherungssensor vorgesehen sein, mit welchem die Bedienabsicht eines Nutzers an Hand der Annäherung eines Körperteils des Nutzers detektiert wird.

Des Weiteren kann die erfindungsgemäße Vorrichtung einen Beschleunigungssensor umfassen, mit dem die Beschleunigung der Anzeigefläche im Raum erfassbar ist. Die Bedieneinrichtung kann die Datenerfassung des Beschleunigungssensors so interpretieren, dass sie dem ersten bzw. zweiten Bedienvorgang zugeordnet wird.

Die Erfindung wird nun an Hand eines Ausführungsbeispiels mit Bezug zu den Zeichnungen erläutert.

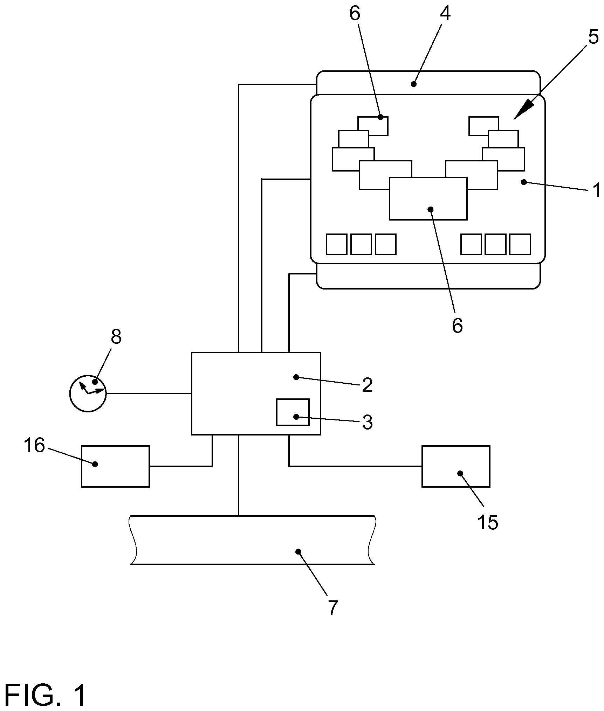

Figur 1            zeigt schematisch ein Ausführungsbeispiel der erfindungsgemäßen Anzeigevorrichtung und die Koppelung dieser Anzeigevorrichtung mit der Elektronik eines Kraftfahrzeugs,

Figur 2            zeigt eine von dem erfindungsgemäßen Verfahren erzeugte Informationsanzeige in einem Kraftfahrzeug, bei der mehrere Objekte dargestellt werden,

Figur 3      zeigt eine von dem erfindungsgemäßen Verfahren erzeugte Informationsanzeige eines aktivierten Objekts,

Figur 4      zeigt die von dem erfindungsgemäßen Verfahren erzeugte Informationsanzeige eines anderen Objekts,

Figur 5      zeigt den zeitlichen Verlauf des Drehwinkels eines Objekts beim Drehen auf dem virtuellen Ring und

die Figuren 6 bis 8      zeigen die Veränderung der angezeigten Listeneinträge bei einem zweiten Bedienvorgang.

Das im Folgenden beschriebene Ausführungsbeispiel betrifft eine Anzeigevorrichtung und ein Verfahren zum Anzeigen von Informationen in einem Fahrzeug, insbesondere einem Kraftfahrzeug. Die Erfindung kann jedoch auf gleiche Weise in einem mobilen oder stationären Gerät der Unterhaltungselektronik, insbesondere einem Gerät zur Wiedergabe von Audio- und Videodateien, eingesetzt werden.

Die Anzeigevorrichtung umfasst ein Display 1 zur grafischen Darstellung von Informationen auf einer Anzeigefläche. Bei dem Display 1 kann es sich um ein Matrix-Display handeln, z. B. ein LCD- (liquid crystal display), insbesondere ein Farbdisplay in TFT- (thinfilm transistor) -Technik. Des Weiteren kann das Display in ein so genanntes twisted nematic-liquid crystal display (TN-LCD), ein super twisted nematic (STN) display, ein Doppelschicht-STN, ein FLC- (ferroelectric liquid crystal) -Display oder ein SSFLC (surface stabilized ferroelectric liquid crystal) sein. Dem Display 1 ist eine (nicht gezeigte) Hintergrundbeleuchtung zugeordnet, die durch eine oder mehrere Licht emittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays 1 gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Benutzerschnittstelleneinrichtung 2 verbunden, mit welcher Grafikdaten für auf dem Display 1 darstellbare grafische Objekte 6 erzeugbar sind. Ferner ist die Benutzerschnittstelleneinrichtung 2 mit einer Eingabeeinrichtung 4 verbunden, über welche der Benutzer Einrichtungen des Fahrzeugs, deren Informationen auf dem Display 1 angezeigt werden, steuern kann. Die Benutzerschnittstelleneinrichtung 2 und die Eingabeeinrichtung 4 bilden eine Bedieneinrichtung, die von einem Nutzer betätigt werden kann und welche die Eingabe eines Nutzers in Grafikdaten zur Darstellung auf dem Display 1 umsetzt.

Die Benutzerschnittstelleneinrichtung 2 ist ferner mit einem Speicher 15 verbunden. In diesem Speicher können insbesondere Daten zu einer Liste sowie die den einzelnen Listeneinträgen zugeordnete grafische Objekte 6 gespeichert sein.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 oder einem separaten Annäherungssensor erkannt und die Annäherung wird als Bedienabsicht interpretiert. Dies kann z. B. dazu führen, dass die von dem Display 1 angezeigten Objekte anders dargestellt werden. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektierte Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigevorrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine Licht emittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere Licht emittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu null ergänzt. Ändert sich die Position des Objekts, ändert sich auch der Lichtanteil, welcher von der ersten Licht emittierenden Diode zur Fotodiode über die Reflexion an dem Objekt gelangt. Dies bewirkt ein Nachführen der Intensität der zweiten Licht emittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Die Benutzerschnittstelleneinrichtung 2 ist ferner mit einer Systemuhr 8 und gegebenenfalls mit einem Fahrzeugbus 7 gekoppelt. Über den Fahrzeugbus 7 kann die Benutzerschnittstelleneinrichtung 2 z. B. mit Fahrerassistenzsystemen des Fahrzeugs verbunden sein. Die Benutzerschnittstelleneinrichtung 2 erhält über den Fahrzeugbus 7 Daten dieser Fahrerassistenzsysteme und bereitet sie so auf, dass diese Daten dem Fahrer bzw. den Fahrzeuginsassen über das Display 1 grafisch dargestellt werden. Die Benutzerschnittstelleneinrichtung 2 erzeugt hierfür Grafikdaten für auf dem Display 1 darstellbare Objekte, welche unter anderem die Informationen der Fahrerassistenzsysteme grafisch darstellen. Ferner ist die Benutzerschnittstelleneinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Benutzerschnittstelleneinrichtung 2 aufbereitet und in Grafikdaten für eine grafische Darstellung umgewandelt. Für Animationen der grafischen Darstellung auf dem Display umfasst die Benutzerschnittstelleneinrichtung eine Recheneinheit 3, welche beim Erzeugen von Zwischenbildern auf die Systemuhr 8 zurückgreift.

Im Folgenden wird die Informationsanzeige in dem Fahrzeug auf dem Display 1 im Detail erläutert:

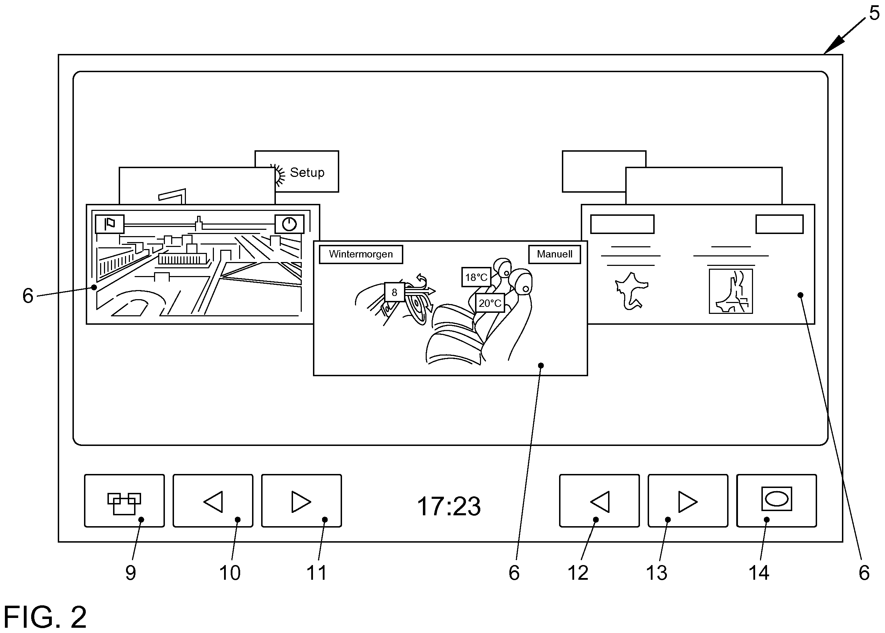

Die Grafikdaten, welche die Benutzerschnittstelleneinrichtung 2 für das Display 1 erzeugt, betreffen eine Teilmenge einer Liste. Von dieser Liste werden mehrere Listeneinträge als Objekte auf einem virtuellen, perspektivisch dargestellten Teilring 5 angeordnet dargestellt. Die perspektivische Darstellung zeigt den virtuellen Teilring 5 so, als ob der Betrachter von schräg oben auf den Teilring 5 schaut. Dabei wird ein Objekt 6 im Vordergrund in der perspektivischen Darstellung am größten dargestellt. Nach hinten werden weitere Objekte 6, zum Teil von vor ihnen befindlichen Objekten 6 verdeckt, dargestellt. Den Objekten 6 bzw. den zugehörigen Listeneinträgen sind eine oder mehrere Einrichtungen des Fahrzeugs zugeordnet. Dabei stellen die in der in Figur 2 gezeigten Objekte 6 entweder nur einen Hinweis auf die zugeordnete Fahrzeugeinrichtung dar oder zusätzlich bereits Informationsinhalte dieser Einrichtung.

Bei der in Figur 2 gezeigten Ansicht betrifft das im Vordergrund dargestellte Objekt 6 die Steuerung der Klimatisierung des Fahrzeuginnenraums. Das Objekt rechts neben und hinter diesem Objekt 6 ist der Musikwiedergabeeinrichtung des Fahrzeugs zugeordnet und das Objekt links neben dem der Klimasteuerung zugeordneten Objekt 6 ist dem Navigationssystem des Fahrzeugs zugeordnet. Ein weiter hinten gelegenes Objekt betrifft die Einstellungen der Anzeigevorrichtung selbst.

Unterhalb des perspektivisch dargestellten virtuellen Teilrings 5 befinden sich Schaltflächen zur Steuerung der von der Benutzerschnittstelleneinrichtung 2 erzeugten Grafikdaten für das Display 1. Mittels einer ersten Schaltfläche 9 kann der Benutzer in jedem Anzeigezustand zu dem Ausgangszustand zurückgelangen, bei dem die Objekte 6 auf dem virtuellen, perspektivisch dargestellten Teilring 5 angeordnet dargestellt werden. Mit den Schaltflächen 10 und 11 können die Objekte 6 auf dem virtuellen Teilring 5 um eine Position karussellartig im Uhrzeigersinn bzw. entgegen dem Uhrzeigersinn gedreht werden, wie es später im Detail erläutert wird. Mit den Schaltflächen 12 und 13 können Funktionen innerhalb eines Objekts 6 betätigt werden, und mit der Schaltfläche 14 kann der Benutzer z. B. direkt zu dem Einstellungsmenü für die Grafik gelangen.

Ausgehend von der in Figur 2 gezeigten Ansicht des Displays 1 kann jedes der auf dem virtuellen Teilring 5 dargestellten Objekte 6 mittels der Eingabeeinrichtung 4 ausgewählt und aktiviert werden. Falls die Eingabeeinrichtung eine berührungsempfindliche Folie umfasst, kann der Nutzer z. B. mit seinem Finger auf das zu aktivierende Objekt 6 tippen. Erfasst die Eingabeeinrichtung 4 z. B. die Position des Fingers oder der Hand des Benutzers vor dem Display 1, reicht es aus, dass der Benutzer seinen Finger an die Position des Displays 1 annähert, bei welcher das zu aktivierende Objekt 6 dargestellt ist. Ist ein Objekt 6 mittels der Eingabeeinrichtung 4 aktiviert worden, wird in einem fließenden Übergang der virtuelle Teilring 5 mit den darauf befindlichen Objekten 6 ausgeblendet und nur noch das aktivierte Objekt 6 dargestellt. Beim Ausblenden des virtuellen Teilrings 5 und der darauf befindlichen Objekte 6 bis zur alleinigen Darstellung des aktivierten Objekts 6, verdrängt das aktivierte Objekte 6 die anderen Objekte 6 des Teilrings 5 und wird kontinuierlich vergrößert, bis nur noch das aktivierte Objekt 6 dargestellt wird. Die Grafikdaten für diesen fließenden Übergang werden von der Benutzerschnittstelleneinrichtung 2 berechnet. Beim Erzeugen der Zwischenbilder greift die Benutzerschnittstelleneinrichtung 2 dabei auf die Systemzeit 8 zurück, um sicherzustellen, dass die Animation fließend, ohne wackelnde Bewegungen wiedergegeben wird.

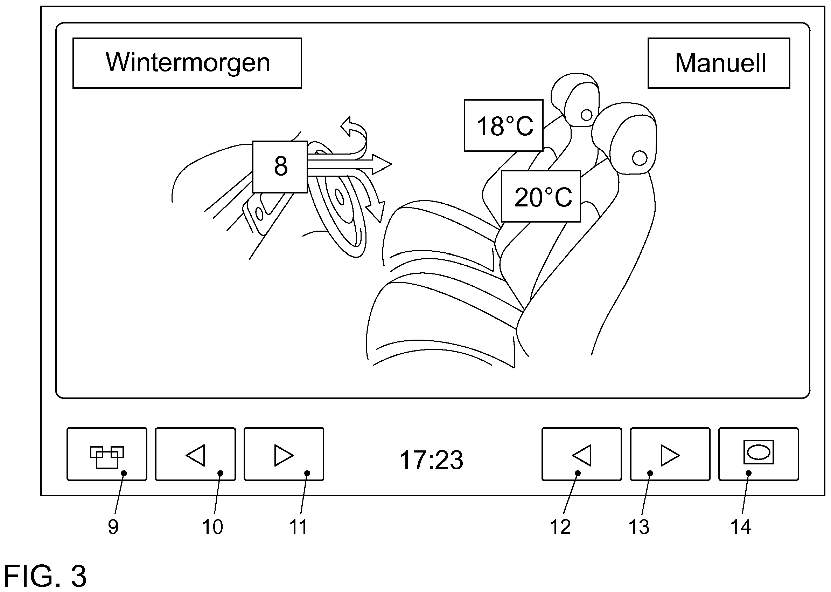

In Figur 3 ist beispielsweise eine Ansicht des Displays 1 gezeigt, die bei einer Aktivierung des der Klimasteuerung zugeordneten Objekts 6 angezeigt wird. In diesem Fall wird die in Figur 2 gezeigte Darstellung des Objekts 6 für die Klimasteuerung vergrößert dargestellt. Die Schaltflächen 9 bis 14 bleiben dabei erhalten. Betätigt der Benutzer aus der von dieser in Figur 3 gezeigten Ansicht die Schaltfläche 9, wird die Darstellung des Objekts 6 für die Klimasteuerung kontinuierlich verkleinert, die weiteren Objekte 6 des virtuellen Teilrings 5 tauchen wieder auf, bis die in Figur 2 gezeigte Ansicht dargestellt wird. Wird andererseits die Schaltfläche 10 bzw. 11 betätigt, wird gleichermaßen das Objekt 6 für die Klimasteuerung verkleinert und die weiteren Objekte 6 des virtuellen Teilrings 5 werden wieder wie in Figur 2 dargestellt angezeigt. Daraufhin wird jedoch der virtuelle Teilring 5 karussellartig im Uhrzeigersinn bzw. entgegen dem Uhrzeigersinn zur nächsten Position gedreht, woraufhin automatisch das nun im Vordergrund stehende nächste Objekt 6 aktiviert wird und in einem fließenden Übergang die anderen Objekte 6 verdrängend vergrößert dargestellt wird, bis nur noch dieses nächste Objekt 6 dargestellt ist.

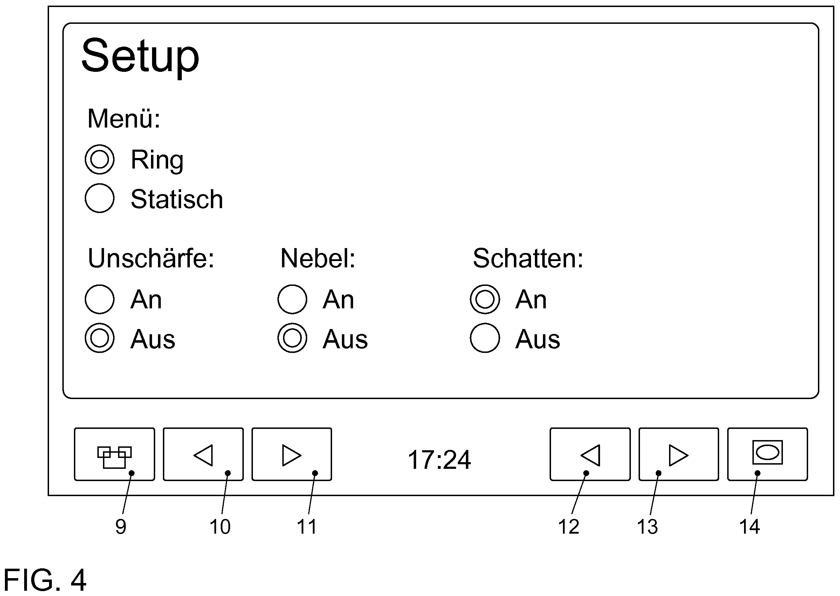

In Figur 4 ist das den Einstellungen der Grafik selbst zugeordnete Objekt 6 dargestellt. Bei der Aktivierung dieses Objekts 6 können mittels der Eingabeeinrichtung 4 verschiedene Einstellungen für die grafische Wiedergabe vorgenommen werden.

Die Listeneinträge, zu denen die grafischen Objekte 6 gehören, sind, wie vorstehend beschrieben, Teil einer hierarchischen Struktur, da die Aktivierung eines Listeneintrags bzw. eines grafischen Objekts 6 dazu führt, dass detailliertere Information angezeigt wird. Ferner kann die Aktivierung eines grafischen Objekts 6 bzw. eines Listeneintrags dazu führen, dass z. B. eine Audiodatei wiedergegeben wird. Auch in diesem Fall entspricht die Wiedergabe der Audiodatei einer tieferen Hierarchiestufe. Bei der Anzeige eines derart hierarchisch organisierten Datenbestands ist der Übergang zwischen zwei statischen Darstellungen auf dem Display 1 von besonderer Bedeutung. Insbesondere wenn die Anzeigevorrichtung nämlich in einem Kraftfahrzeug untergebracht ist, ist es besonders wichtig, dass insbesondere der Fahrer des Kraftfahrzeugs die auf dem Display 1 dargestellten Informationen schnell, einfach und intuitiv erfassen kann, selbst wenn er nur für kurze Zeitintervalle seinen Blick auf das Display 1 richtet. Dabei ist es besonders wichtig, dass sich der Betrachter jederzeit gut innerhalb der hierarchischen Struktur orientieren kann. Es hat sich ergeben, dass abrupte Wechsel von Anzeigebildern hierfür nachteilhaft sind. Es hat sich insbesondere herausgestellt, dass fließende Übergänge zwischen zwei statischen Darstellungen, bei denen Zwischenbilder angezeigt werden, welche den Übergang zwischen den zwei statischen Darstellungen verdeutlichen, die Orientierung in der Struktur sowie die Erfassbarkeit des Informationsinhalts erleichtern.

Ferner ist besonders wichtig, wie die Zwischenbilder den Übergang zwischen zwei statischen Darstellungen visualisieren. Dabei hat sich herausgestellt, dass ein linearer Übergang von einer statischen Darstellung zur nächsten statischen Darstellung bei der Anwendung in einem Kraftfahrzeug nicht geeignet ist. Vielmehr sind Zwischenbilder von Vorteil, welche eine Bewegung der Objekte 6 veranschaulichen, die zumindest zum Teil abgebremst wird. Auch sind die Parameter für die Wahl der Abbremsung und die Dauer des Übergangs an die Anwendung im Fahrzeug anzupassen, so dass herkömmliche, aus dem Computerbereich bekannte Animationen zumeist nicht verwendbar sind.

Im Folgenden wird im Detail beschrieben, wie der Benutzer mittels der Eingabeeinrichtung 4 die auf dem virtuellen Teilring 5 angeordneten Objekte 6 karussellartig auf diesem virtuellen Teilring 5 drehen kann.

Der Ausgangspunkt der Drehung ist die in Figur 2 gezeigte Anordnung der Objekte 6 auf dem virtuellen Teilring 5. Die Objekte 6 werden somit auf einer ringförmigen eindimensionalen Line dargestellt. Der Benutzer gibt nun durch einen ersten Bedienvorgang über die Eingabeeinrichtung 4 den Gesamtdrehwinkel $\alpha_{Drehung}$ vor, um den die Objekte 6 auf dem Gesamtring, von dem nur ein Teilring 5 angezeigt wird, gedreht werden sollen. Hierfür gibt der Benutzer z. B. mittels der Eingabeeinrichtung 4 eine Linie auf dem Display 1 ein. Umfasst die Eingabeeinrichtung 4 eine berührungsempfindliche Folie, kann der Benutzer mit seinem Finger über die Folie fahren, um diese Linie vorzugeben. Diese Linie zur Eingabe des ersten Bedienvorgangs verläuft insbesondere im Wesentlichen auf der Linie, auf der die Objekte 6 dagestellt werden, oder parallel zu dieser Linie. Falls die Eingabeeinrichtung 4 eine Geste des Benutzers bzw. eine Bewegung seiner Hand oder seines Fingers vor dem Display 1 erfassen kann, wird auf diese Weise die Eingabe der Linie vorgenommen. Falls die Linie nicht in Richtung der Breite des Displays 1 ausgerichtet ist, sondern schräg verläuft, wird bevorzugt nur die Länge der parallel zur Breite des Displays 1 ausgerichteten Horizontalkomponente der eingegebenen Linie verwendet, sofern die Abweichung von der Horizontalen 45° nicht übersteigt. Aus dem Verhältnis der Länge dieser Horizontalkomponente der Linie zu der Gesamtbreite des Displays 1 wird der Gesamtdrehwinkel $\alpha_{Drehung}$ berechnet. Tatsächlich werden die Objekte 6 bei der perspektivischen Darstellung auf dem Display 1 nur in der Ebene des Displays 1 verschoben. Der Drehwinkel $\alpha$ wird somit bei dem Erzeugen der Grafikdaten durch die Benutzerschnittstelleneinrichtung 2 entsprechend transformiert.

Ist die Eingabeeinrichtung 4 ein abgesetztes Bedienelement mit einem Drehgeber, kann der Gesamtdrehwinkel auch über den Drehwinkel des Drehgebers eingegeben werden.

Da auf dem Display 1 nur eine Teilmenge der Liste angezeigt wird, ergibt sich bei der Drehung des virtuellen Rings eine Veränderung der angezeigten Teilmenge. Bei der Drehung verschwinden auf der einen Seite des Teilrings 5 Objekte 6 und auf der anderen Seite des Teilrings 5 werden neue Objekte 6 angezeigt, die zu Listeneinträgen gehören, die ursprünglich nicht angezeigt wurden. Durch den ersten Bedienvorgang können auf diese Weise die Listeneinträge der Liste nacheinander durchlaufen werden, wobei die Listeneinträge an Hand der grafischen Objekte 6 dargestellt werden.

Nachdem der Gesamtdrehwinkel $\alpha_{Drehung}$ mittels der Eingabeeinrichtung 4 vom Benutzer eingegeben worden ist, wird von einer Recheneinheit 3 der Benutzerschnittstelleneinrichtung 2 eine Animation erzeugt, welche die Grafikdaten für aufeinander folgende Zwischenbilder umfasst, welche aufeinander folgende Drehwinkel $\alpha$ für die Objekte 6 wiedergeben. Der Übergang von dem Ausgangszustand mit einem Ausgangswinkel der Objekte zu einem Endzustand, bei dem die Objekte um den gesamten Winkel $\alpha_{Drehung}$ gedreht worden sind, erfolgt dabei durch eine abgebremste Bewegung, welche mittels folgender Rechenschritte berechnet ist:

$$\text{(i)} \quad n = \frac{t}{d} - 1 \qquad ;$$

$$\text{(ii)} \quad \alpha = b + \alpha_{Drehung} \cdot (1 - n^4).$$

Dabei ist t die Systemzeit, die von der Recheneinheit 3 von der Systemuhr 8 abgerufen wird. Zu Beginn der Drehung ist die Systemzeit gleich null. Im Endzustand der Drehung entspricht die Systemzeit t der Dauer d der Gesamtdrehung um den Gesamtwinkel = Winkel x Drehung. Die Schritte (i) und (ii) werden dabei so oft wiederholt, bis die Systemzeit t größer als die Dauer d der Gesamtdrehung ist.

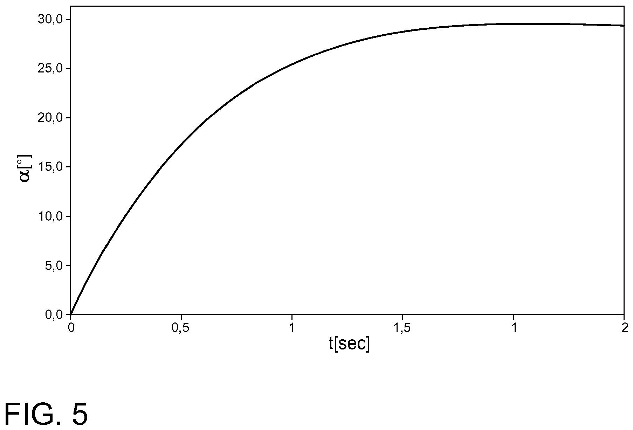

In Figur 5 ist der zeitliche Verlauf des Drehwinkels $\alpha$ für die Zwischenbilder gezeigt, wenn ein Objekt 6 um den Gesamtdrehwinkel $\alpha_{Drehung}$ von 30° in 2,5 Sekunden gedreht wird. Es zeigt sich, dass die Drehgeschwindigkeit zunächst relativ schnell ist und dann abgebremst wird.

Bei dem vorliegenden Ausführungsbeispiel wird außerdem der Gesamtdrehwinkel $\alpha_{Dre\text{-}hung}$ auf einen Drehwinkel angepasst, welcher einer karussellartigen Drehung der Objekte 6 auf dem virtuellen Teilring 5 entspricht, bei dem im Endzustand ein Objekt 6, wie in Figur 2 gezeigt, im Vordergrund erscheint. Der vom Benutzer über die Eingabeeinrichtung 4 eingegebene Drehwinkel wird somit auf diese diskreten Drehwinkel auf- oder abgerundet.

Wird ein Objekt von dem Benutzer mittels der Eingabeeinrichtung 4 in den Vordergrund gedreht, wird dieses Objekt 6 nach Ablauf eines Zeitintervalls automatisch aktiviert. Somit wird dieses Objekt 6 nach dem Ablauf des Zeitintervalls vergrößert, wobei gleichzeitig der virtuelle Teilring 5 mit den anderen Objekten 6 verschwindet, bis nur noch das aktivierte Objekt 6 dargestellt wird.

Gemäß einer Weiterbildung des Ausführungsbeispiels werden in der Benutzerschnittstelleneinrichtung 2 und damit der Recheneinheit 3 über den Fahrzeugbus 7 die Daten des Geschwindigkeitsmessers des Kraftfahrzeugs übertragen. Diese Daten werden von der Recheneinheit 3 verwendet, um die Dauer der Drehung zu ermitteln. Dabei ist die Dauer der Gesamtdrehung umso länger, je höher die Geschwindigkeit des Kraftfahrzeugs ist.

Des Weiteren ist bei dem erfindungsgemäßen Verfahren bzw. mit der erfindungsgemäßen Vorrichtung ein zweiter Bedienvorgang durchführbar. Bei diesem Bedienvorgang wird von dem Nutzer eine Bedienbewegung durchgeführt, die sich von der Bedienbewegung des ersten Bedienvorgangs unterscheidet. Im vorliegenden Fall wird eine senkrechte Bedienbewegung nach oben oder nach unten durchgeführt. Beispielsweise kann der Nutzer auf der berührungsempfindlichen Oberfläche den Finger nach oben oder nach unten bewegen. Die zweite Bedienbewegung startet insbesondere mit einer Berührung der berührungsempfindlichen Oberfläche bei einer Position, bei der ein Objekt 6, d. h. ein Listeneintrag der Teilmenge der Liste, angezeigt wird. Für den zweiten Bedienvorgang muss somit nicht - wie im Stand der Technik - z. B. ein separater Index angezeigt werden, um Listeneinträge zu überspringen. Es reicht aus, dass eine Bedienbewegung ausgeführt wird, die eine Bewegungsrichtung aufweist, die sich eindeutig von der Bewegungsrichtung der ersten Bedienbewegung unterscheidet. Des Weiteren kann er eine entsprechende Geste vor der Anzeigefläche 1 ausführen. Schließlich ist es möglich, dass er entsprechende mechanische Bedienelemente zur Steuerung der Bewegung eines Objekts 6 in eine entsprechende Richtung betätigt.

Der zweite Bedienvorgang hat zur Folge, dass die Benutzerschnittstelleneinrichtung 2 die Grafikdaten so verändert, dass bei der Anzeige der Teilmenge der Liste mehrere Listeneinträge übersprungen werden, um zu einem Listeneintrag zu gelangen, der bzw. dessen zugehöriges grafisches Objekt 6 nicht in der angezeigten Teilmenge der Listeneinträge enthalten ist, die beim Ausführen des zweiten Bedienvorgangs angezeigt wurden. Nach dem Ausführen des zweiten Bedienvorgangs wird somit ein grafische Objekt 6 im Vordergrund dargestellt, welches vorher nicht dargestellt wurde. Der Gesamtring mit den Listeneinträgen wurde direkt in einen gedrehten Zustand überführt, bei dem eine andere Teilmenge der Liste angezeigt wird, ohne dass es erforderlich war, die einzelnen Listeneinträge nacheinander zu durchlaufen.

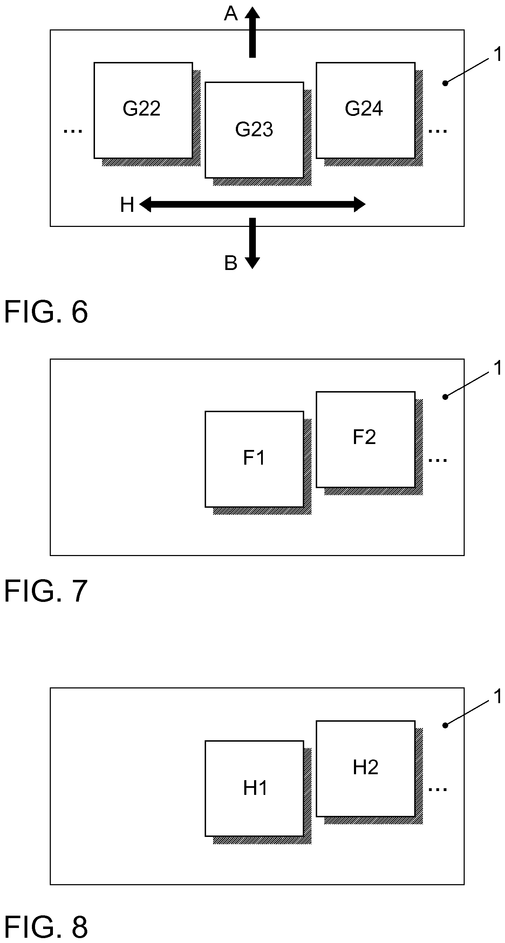

Der zweite Bedienvorgang wird im Folgenden im Detail mit Bezug zu den Figuren 6 bis 8 erläutert:

Der Ausgangspunkt ist die Anzeige einer Teilmenge einer Liste auf der Anzeigefläche des Displays 1, wie sie in Figur 6 wiedergegeben ist. Diese Informationsanzeige entspricht im Wesentlichen der in Figur 2 wiedergegebenen Informationsanzeige der Listeneinträge an Hand der grafischen Objekte 6. Bei dem in Figur 6 gezeigten Zustand werden beispielhaft drei Listeneinträge G22, G23, und G24 dargestellt.

Die Listeneinträge dieser Liste sind in Klassen eingeteilt, wobei die einzelnen Klassen wiederum eine Liste bilden. Im vorliegenden Fall kann es sich beispielsweise um eine alphabetische Sortierung von Bergriffen, die den Listeneinträgen zugeordnet sind, handeln. Die Listeneinträge G22, G23 und G24 sind in diesem Fall die Einträge Nr. 22 bis 24 mit dem Anfangsbuchstaben G. Die Listeneinträge mit anderen Anfangsbuchstaben sind entsprechend sortiert.

Der Nutzer kann nun durch einen ersten Bedienvorgang, wie vorstehend erläutert, mittels einer Bedienbewegung in Richtung des Doppelpfeils H eine Veränderung der angezeigten Listeneinträge herbeiführen. Bewegt er den Finger auf der berührungsempfindlichen Oberfläche beispielsweise nach links, bewegt sich auch die angezeigte Teilmenge der Liste nach links, so dass auf der linken Seite Listeneinträge verschwinden und auf der rechten Seite neue Listeneinträge auftauchen. Entsprechend verschwinden bei einer Bedienbewegung nach rechts Listeneinträge auf der rechten Seite und es tauchen neue Listeneinträge auf der linken Seite auf.

Bei dem zweiten Bedienvorgang kann der Nutzer eine Bewegung in Richtung des Pfeils A nach oben oder in Richtung des Pfeils B nach unten ausführen. Eine Bedienbewegung in Richtung des Pfeils A nach oben hat dabei zur Folge, dass die angezeigte Teilmenge der Listeneinträge unmittelbar so verändert wird, dass mehrere Listeneinträge übersprungen werden und man zu dem ersten Listeneintrag des nächsten Anfangsbuchstaben, d. h., wie in Figur 7 gezeigt, zu dem Listeneintrag F1 gelangt. Ferner kann sich die angezeigte Teilmenge der Liste so verändern, dass der letzte Listeneintrag oder die letzten Einträge mit dem Anfangsbuchstaben G nicht in der angezeigten Teilmenge enthalten ist bzw. sind.

Umfasst der zweite Bedienvorgang hingegen eine Bedienbewegung in Richtung des Pfeils B nach unten, gelangt man unmittelbar zu dem ersten Listeneintrag mit dem nächstniedrigeren Anfangsbuchstaben, d. h., wie in Figur 8 gezeigt, zum Listeneintrag H1. Es wird somit eine Teilmenge der Liste angezeigt, die mit dem Listeneintrag H1 beginnt und danach weitere Listeneinträge mit dem Anfangsbuchstaben H zeigt.

Die Benutzerschnittstelleneinrichtung 2 kann ferner mit einem Beschleunigungssensor 16 gekoppelt sein, der alternativ oder zusätzlich als Eingabeeinrichtung dienen kann. Der Beschleunigungssensor 16 kann eine Beschleunigung der Vorrichtung, die in diesem Fall insbesondere als mobiles Gerät ausgebildet ist, sowie die Beschleunigungsrichtung erfassen. Eine Bewegung der Vorrichtung, einschließlich der Anzeigefläche 1 im Raum, entspricht in diesem Fall der vorstehend erläuterten Bewegung auf der berührungsempfindlichen Oberfläche der Anzeigefläche 1. Durch eine Bewegung nach links kann in diesem Fall beispielsweise in eine Richtung durch die Liste gescrollt werden und bei einer Bewegung nach rechts kann in die andere Richtung durch die Liste gescrollt werden. Eine Bewegung nach oben führt zum Überspringen mehrerer Listeneinträge nach vorne in der Liste und eine Bewegung nach unten zu einem Überspringen mehrerer Listeneinträge nach hinten, wie es vorstehend erläutert wurde.

**BEZUGSZEICHENLISTE**

1       Display

| 2 | Benutzerschnittstelleneinrichtung |
|---|---|
| 3 | Recheneinheit |
| 4 | Eingabeeinrichtung |
| 5 | virtueller Teilring |
| 6 | grafische Objekte |
| 7 | Fahrzeugbus |
| 8 | Systemuhr |
| 9-14 | Schaltflächen eines Objekts 6 |
| 15 | Speicher |
| 16 | Beschleunigungssensor |

**Patentansprüche**

**1.** Verfahren zum Anzeigen von Informationen, bei dem

- auf einer Anzeigefläche eine Teilmenge einer Liste angezeigt wird, die eine Vielzahl von Listeneinträgen (G22, G23, G24) umfasst, und
- die angezeigte Teilmenge der Liste durch einen ersten Bedienvorgang eines Nutzers verändert wird,
- wobei durch den ersten Bedienvorgang die Listeneinträge der Liste nacheinander durchlaufen werden,
- wobei durch einen zweiten Bedienvorgang mehrere Listeneinträge übersprungen werden, um zu einem Listeneintrag (F1) zu gelangen, der nicht in der angezeigten Teilmenge der Listeneinträge (G22, G23, G24) enthalten ist, die beim Ausführen des zweiten Bedienvorgangs angezeigt wurden,
- wobei der erste und der zweite Bedienvorgang eine Bewegung auf einer berührungsempfindlichen Oberfläche einer Eingabeeinrichtung (4) umfasst, die auf der Anzeigefläche ausgebildet ist, und
- wobei der erste Bedienvorgang eine Bewegung in einer ersten Richtung (H) und der zweite Bedienvorgang eine Bewegung in einer zweiten Richtung (A, B) umfasst, wobei sich die erste Richtung (H) von der zweiten Richtung (A, B) unterscheidet,

**dadurch gekennzeichnet,**

- **dass** der zweite Bedienvorgang eine Bewegung (A, B) ist, die mit einer Berührung der berührungsempfindlichen Oberfläche bei einer Position startet, bei der ein Listeneintrag (G23) der Teilmenge angezeigt wird.

**2.** Verfahren nach Anspruch 1,
**dadurch gekennzeichnet,**
**dass** die Listeneinträge der Liste in Klassen eingeteilt sind und dass man durch den zweiten Bedienvorgang zu einem Listeneintrag einer anderen Klasse gelangt.

**3.** Verfahren nach einem der vorhergehenden Ansprüche,
**dadurch gekennzeichnet,**
**dass** man durch den ersten Bedienvorgang durch die Liste scrollt.

**4.** Verfahren nach einem der vorhergehenden Ansprüche,
**dadurch gekennzeichnet,**
**dass** die berührungsempfindliche Oberfläche der Eingabeeinrichtung (4) auf der Anzeigefläche ausgebildet ist, dass die Listeneinträge (G22, G23, G24) der Teilmenge der Liste in einer eindimensionalen Linie auf der Anzeigefläche angezeigt wird, dass der erste Bedienvorgang eine Bewegung auf der berührungsempfindlichen Oberfläche umfasst, die im Wesentlichen in Richtung (H) der eindimensionalen Linie verläuft, und dass der zweite Bedienvorgang eine Bewegung auf der berührungsempfindlichen Oberfläche umfasst, die im Wesentlichen in einer zu der eindimensionalen Linie senkrechten Richtung (A, B) verläuft.

**5.** Verfahren nach einem der vorhergehenden Ansprüche,
**dadurch gekennzeichnet,**
**dass** die angezeigten Listeneinträge auf einem virtuellen, perspektivisch dargestellten Ring oder Teilring (5) angeordnet dargestellt werden und dass durch den ersten Bedienvorgang die angezeigten Listeneinträge auf dem virtuellen Ring oder Teilring (5) karussellartig gedreht werden.

**6.** Vorrichtung zum Anzeigen von Informationen mit,

- einer Anzeigevorrichtung mit einer Anzeigefläche,
- einem Speicher (15) zum Speichern einer Liste, die eine Vielzahl von Listeneinträgen umfasst, von der eine Teilmenge auf der Anzeigefläche anzeigbar ist, und
- einer Bedieneinrichtung (2, 4; 2, 16), die eine Eingabeeinrichtung (4) mit einer berührungsempfindlichen Oberfläche umfasst und die von einem Nutzer betätigbar ist, um die angezeigte Teilmenge der Liste durch einen ersten Bedienvorgang zu verändern, wobei durch den ersten Bedienvorgang die Listeneinträge der Liste nacheinander durchlaufen werden und wobei die Bedieneinrichtung (2, 4; 2, 16) von dem Nutzer mit einem zweiten Bedienvorgang betätigbar ist, durch den mehrere Listeneinträge übersprungen werden, um zu einem Listeneintrag (F1) zu gelangen, der nicht in der angezeigten Teilmenge der Listeneinträge (G22, G23, G24) enthalten ist, die beim Ausführen des zweiten Bedienvorgangs angezeigt wurden,
- wobei der erste und der zweite Bedienvorgang eine Bewegung auf einer berührungsempfindlichen Oberfläche einer Eingabeeinrichtung (4) umfasst und
- wobei der erste Bedienvorgang eine Bewegung in einer ersten Richtung (H) und der zweite Bedienvorgang eine Bewegung in einer zweiten Richtung (A, B) umfasst, wobei sich die erste Richtung (H) von der zweiten Richtung (A, B) unterscheidet

**dadurch gekennzeichnet,**

**dass** der zweite Bedienvorgang eine Bewegung (A, B) ist, die mit einer Berührung der berührungsempfindlichen Oberfläche bei einer Position startet, bei der ein Listeneintrag (G23) der Teilmenge angezeigt wird.

**7.** Vorrichtung nach Anspruch 6,
**dadurch gekennzeichnet,**
**dass** die Vorrichtung einen Beschleunigungssensor (16) umfasst, mit dem die Beschleunigung der Anzeigefläche im Raum erfassbar ist.

## Claims

**1.** Method for displaying information, in which

- a subset of a list comprising a multiplicity of list entries (G22, G23, G24) is displayed on a display surface, and
- the displayed subset of the list is changed by means of a first operation by a user,
- the list entries in the list being run through in succession by means of the first operation,
- a plurality of list entries being skipped by means of a second operation in order to arrive at a list entry (F1) which is not included in the displayed subset of list entries (G22, G23, G24) which were displayed when performing the second operation,
- the first and second operations comprising a movement on a touch-sensitive surface of an input device (4) which is formed on the display surface,

and

- the first operation comprising a movement in a first direction (H) and the second operation comprising a movement in a second direction (A, B), the first direction (H) differing from the second direction (A, B), **characterized**
- **in that** the second operation is a movement (A, B) which starts with touching of the touch-sensitive surface at a position at which a list entry (G23) in the subset is displayed.

**2.** Method according to Claim 1,
**characterized**
**in that** the list entries in the list are divided into classes, and in that a list entry in another class is arrived at by means of the second operation.

**3.** Method according to one of the preceding claims,
**characterized**
**in that** the list is scrolled through by means of the first operation.

**4.** Method according to one of the preceding claims, **characterized**
**in that** the touch-sensitive surface of the input device (4) is formed on the display surface, in that the list entries (G22, G23, G24) in the subset of the list are displayed in a one-dimensional line on the display surface, in that the first operation comprises a movement on the touch-sensitive surface which runs substantially in the direction (H) of the one-dimensional line, and in that the second operation comprises a movement on the touch-sensitive surface which runs substantially in a direction (A, B) perpendicular to the one-dimensional line.

**5.** Method according to one of the preceding claims, **characterized**
**in that** the displayed list entries are presented in a manner arranged on a virtual, perspectively illustrated ring or part-ring (5), and in that the displayed list entries on the virtual ring or part-ring (5) are rotated in a carousel-like manner by means of the first operation.

**6.** Apparatus for displaying information, having

- a display apparatus having a display surface,
- a memory (15) for storing a list comprising a multiplicity of list entries, a subset of which can be displayed on the display surface, and
- an operating device (2, 4; 2, 16) which comprises an input device (4) having a touch-sensitive surface and can be actuated by a user in order to change the displayed subset of the list by means of a first operation, the list entries in the list being run through in succession by means of the first operation, and the operating device (2, 4; 2, 16) being able to be actuated by the user using a second operation, by means of which a plurality of list entries are skipped in order to arrive at a list entry (F1) which is not included in the displayed subset of the list entries (G22, G23, G24) which were displayed when performing the second operation,
- the first and second operations comprising a movement on a touch-sensitive surface of an input device (4), and
- the first operation comprising a movement in a first direction (H) and the second operation comprising a movement in a second direction (A, B), and
the first direction (H) differing from the second direction (A, B), **characterized in that** the second operation is a movement (A, B) which starts with touching of the touch-sensitive surface at a position at which a list entry (G23) in the subset is displayed.

**7.** Apparatus according to Claim 6, **characterized**
**in that** the apparatus comprises an acceleration sensor (16) which can be used to sense the acceleration of the display surface in space.

**Revendications**

**1.** Procédé d'affichage d'informations, avec lequel

- une quantité partielle d'une liste est affichée sur une surface d'affichage, laquelle comprend une pluralité d'entrées de liste (G22, G23, G24), et
- la quantité partielle de la liste est modifiée par une première opération de commande d'un utilisateur,
- les entrées de liste de la liste étant mises à défiler l'un après l'autre par la première opération de commande,
- plusieurs entrées de liste étant sautées par une deuxième opération de commande afin de parvenir jusqu'à une entrée de liste (F1) qui n'est pas incluse dans la quantité partielle affichée d'entrées de liste (G22, G23, G24) qui ont été affichées lors de l'exécution de la deuxième opération de commande,
- la première et la deuxième opération de commande comprenant un mouvement sur une surface tactile d'un dispositif de saisie (4) qui est configuré sur la surface d'affichage, et
- la première opération de commande comprenant un mouvement dans une première direction (H) et la deuxième opération de commande un mouvement dans une deuxième direction (A, B), la première direction (H) étant différente de la deuxième direction (A, B), **caractérisé en ce**
- **que** la deuxième opération de commande est un mouvement (A, B) qui commence avec un toucher de la surface tactile à une position à laquelle est affichée une entrée de liste (G23) de la quantité partielle.

**2.** Procédé selon la revendication 1, **caractérisé en ce que** les entrées de liste de la liste sont divisées en catégories et **en ce que** la deuxième opération de commande fait passer à une entrée de liste d'une autre catégorie.

**3.** Procédé selon l'une des revendications précédentes, **caractérisé en ce que** la première opération de commande permet de parcourir la liste.

**4.** Procédé selon l'une des revendications précédentes, **caractérisé en ce que** la surface tactile du dispositif de saisie (4) est représentée sur la surface d'affichage, **en ce que** les entrées de liste (G22, G23, G24) de la quantité partielle de la liste sont affichées en une ligne unidimensionnelle sur la surface d'affichage, **en ce que** la première opération de commande comprend un mouvement sur la surface tactile qui se déroule sensiblement dans la direction (H) de la ligne unidimensionnelle, et **en ce que** la deuxième opération de commande comprend un mouvement sur la surface tactile qui se déroule sensiblement dans une direction (A, B) perpendiculaire la ligne unidimensionnelle.

**5.** Procédé selon l'une des revendications précédentes, **caractérisé en ce que** les entrées de liste affichées sont représentées disposées sur un anneau ou un anneau partiel (5) virtuel représenté en perspective et **en ce que** la première opération de commande fait tourner les entrées de liste affichées à la manière d'un carrousel sur l'anneau ou l'anneau partiel (5) virtuel.

**6.** Dispositif d'affichage d'informations, comprenant

- un dispositif d'affichage pourvu d'une surface d'affichage,
- une mémoire (15) destinée à mémoriser une liste, laquelle comprend une pluralité d'entrées de liste dont une quantité partielle peut être affichée sur la surface d'affichage, et
- un dispositif de commande (2, 4 ; 2, 16), lequel comporte un dispositif de saisie (4) doté d'une surface tactile et qui peut être actionné par un utilisateur afin de modifier la quantité partielle affichée de la liste par une première opération de commande, les entrées de liste de la liste étant mises à défiler l'un après l'autre de par la première opération de commande et le dispositif de commande (2, 4 ; 2, 16) pouvant être actionné par l'utilisateur avec une deuxième opération de commande par laquelle plusieurs entrées de liste étant sautées afin de parvenir jusqu'à une entrée de liste (F1) qui n'est pas incluse dans la quantité partielle affichée d'entrées de liste (G22, G23, G24) qui ont été affichées lors de l'exécution de la deuxième opération de commande,
- la première et la deuxième opération de commande comprenant un mouvement sur une surface tactile d'un dispositif de saisie (4),
- la première opération de commande comprenant un mouvement dans une première direction (H) et la deuxième opération de commande un mouvement dans une deuxième direction (A, B), la première direction (H) étant différente de la deuxième direction (A, B), **caractérisé en ce**
- **que** la deuxième opération de commande est un mouvement (A, B) qui commence avec un toucher de la surface tactile à une position à laquelle est affichée une entrée de liste (G23) de la quantité partielle.

**7.** Dispositif selon la revendication 6, **caractérisé en ce que** le dispositif comprend un capteur d'accélération (16) qui permet de détecter l'accélération de la surface d'affichage dans l'espace.

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2434068 A
- US 7269002 B1
- DE 10058244 C2
- DE 10305341 A1
- DE 102004048956 A1
- EP 1212208 B1